# EUROPÄISCHE PATENTSCHRIFT

(11) **EP 1 345 668 B1**
(45) Veröffentlichungstag und Bekanntmachung des Hinweises auf die Patenterteilung: **06.07.2005**
(21) Anmeldenummer: 01271250.1
(22) Anmeldetag: 05.12.2001
(51) Int. Cl.: B01D 29/11

(54) **FILTERELEMENT**
FILTER ELEMENT
ELEMENT FILTRANT

(30) Priorität: 21.12.2000 DE 10063881
(43) Veröffentlichungstag der Anmeldung: 24.09.2003
(73) Patentinhaber: Mann + Hummel GmbH, 71638 Ludwigsburg (DE)
(72) Erfinder: KOCHERT, Stefan, 68766 Hockenheim (DE); MÖSSINGER, Klaus, 74182 Obersulm (DE); SPÄTH, Bernd, 89077 Ulm (DE)
(74) Vertreter: Voth, Gerhard, Dipl.-Ing.
(86) Internationale Anmeldenummer: PCT/EP2001/014251
(87) Internationale Veröffentlichungsnummer: WO 2002/049738

(56) Entgegenhaltungen:
- EP-A- 0 568 381
- WO-A-98/15303
- DE-A- 19 540 876
- US-A- 1 342 986
- US-A- 2 217 370
- US-A- 5 580 456
- US-A- 5 833 853
- US-A- 5 909 773

## Beschreibung

### Stand der Technik

Die Erfindung betrifft ein Filterelement nach dem Oberbegriff des Patentanspruches 1, sowie einen Luftfilter nach Patentanspruch 7.

Das Dokument US 5,909,773 offenbart ein Filterelement zum Reinigen eines Fluidstromes. Das Filterelement verfugt über einen zylindrischen Stützkörper mit einer Mantelfläche und zwei Stirnseiten. Der Stützkörper ist für das zu reinigende Fluid durchlässig. Auf den Stützkörper ist ein Filtermedium aufgebracht, wobei es durch eine Schweißverbindung mit dem Stützkörper verbunden ist. Das Filterelement ist mit einem Stutzen, welcher mit dem Stützkörper korrespondiert, an eine Pumpe angeschlossen. Hierzu ist eine spezielle Dichtung in dem Verbindungsbereich erforderlich.

Es ist aus der DE 37 23 807 ein rohrförmiges Filterelement bekannt, welches von einem starren, radial gelochten Stützrohr, einem Filtermedium und Endscheiben gebildet wird. Das Stützrohr ist außen mit dem Filtermedium überzogen. Die Endscheiben bestehen aus Kunststoff, welche nachträglich an das Stützrohr angespritzt sind. Die Endscheiben das Filtermedium dichtend, wodurch das Filtermedium auf dem Stützrohr fixiert wird.

Wie allgemein bekannt ist, werden Stützrohre mit einem vorkonfektioniertem schlauchförmigen Filtermedium überzogen. Hierbei kann das Filtermedium z.B. mit einer Längsnaht zusammengenäht sein, wodurch sich das schlauchförmige Filtermedium ergibt. Dieses vorgefertigte schlauchförmige Filtermedium wird in einem Montagevorgang über das Stützrohr gezogen.

Es sind jedoch für jeden Stützrohrdurchmesser separate schlauchförmige Filtermedien anzufertigen, was neben einem erheblichen logistischen Aufwand noch Montage- und Lagerkosten verursacht. Weiterhin lassen sich manche Filtermedien, insbesondere beschichtete Filtermedien im vorgefertigten Zustand nicht über das Stützrohr ziehen, da sie nicht aus dem Stützrohr gleiten.

Die Aufgabe der Erfindung besteht darin, ein Filterelement mit einem Stützkörper und einem Filtermedium zu schaffen, welches einfach und kostengünstig herstellbar ist. Diese Aufgabe wird durch die Merkmale des Patentanspruches 1 gelöst.

### Vorteile der Erfindung

Das erfindungsgemäße Filterelement dient der Reinigung eines Fluides wie z.B. Luft und weist einen Stützkörper mit einer Mantelfläche und zwei Stirnseiten, sowie ein schweißbares Filtermedium auf. Hierbei kann das Filtermedium z.B. durch ein Polyestervlies gebildet werden. Der Stützkörper ist zylindrisch ausgebildet, wobei er einen beliebigen z.B. kreisförmigen oder ovalen Querschnitt aufweisen kann. Weiterhin ist der Stützkörper für das zu reinigende Fluid durchlässig. Die Durchlässigkeit des Stützkörpers kann z.B. durch mehrere Fenster in dem Stützkörper oder durch ein fluiddurchlässiges Material bei einem nicht durchbrochenen Zylinder erzeugt werden. Die Fenster können beliebig z.B. kreisförmig oder rechteckig ausgeführt sein. Das Filtermedium umschließt den Stützkörper an seiner Mantelfläche und ist durch mindestens eine Schweißnaht mit dem Stützkörper verschweißt. Beim Verschweißen des Filtermediums mit dem Stützkörper wird das Filtermedium im Bereich der Schweißnaht verdichtet, wodurch die Schweißnaht nicht höher aufträgt als das übrige Material. Dadurch können diverse Montagevarianten realisiert werden, welche bei einer höher auftragenden Naht, wie sie z.B. beim Vernähen entsteht, nicht umgesetzt werden können. Der Stützkörper besteht aus einem schweißbaren Material, welches beim Verschweißen des Filtermediums oberflächlich angeschmolzen wird, wodurch das Filtermedium zumindest stellenweise mit dem Stützkörper eine Verbindung eingeht. Das Filtermedium kann sich teilweise, z.B. entlang der Schweißnaht überlappen, wodurch das Filtermedium sowohl mit sich selbst, als auch mit dem Stützkörper dichtend verschweißt werden kann. Wenn das Filtermedium mit sich selbst verschweißt ist, kann entlang der Schweißnaht keine Leckage auftreten.

Das Filtermedium kann in einem kontinuierlichen Prozeß direkt von einem Coil abgewickelt, um den Stützkörper gewickelt, verschweißt und abgeschnitten werden, wobei die Reihenfolge der Arbeitsgänge auch variiert werden kann. Bei einem besonderen Herstellungsverfahren werden mehrere Stützkörper direkt hintereinander mit dem Filtermedium überzogen und anschließend durch das Abschneiden des Filtermediums vereinzelt. Durch die Verarbeitung des Filtermediums direkt von dem Coil, entfallen Arbeitsgänge, welche durch das Vorkonfektionieren eines Filterschlauches, der über den Stützkörper gezogen wird, verursacht werden. Weiterhin können auch beschichtete Filtermedien, welche nicht auf dem Stützrohr gleiten, um das Stützrohr gewickelt werden.

Der Stützkörper weist einen radial umlaufenden Dichtungswulst auf, welcher auf der Mantelfläche nahe einer der beiden Stirnseiten angeordnet ist. Der Dichtungswulst ist dichtend an einer Aufnahme abgestützt, welche in einem, das Filterelement umgebende Bauteil wie z.B. ein Gehäuse angeordnet ist. Der Dichtungswulst kann z.B. durch eine Ausgestaltung des Stützkörpers selbst oder durch ein gesondertes Bauteil gebildet werden. Bei einem gesonderten Bauteil kann ein Material, wie z.B. PUR-Schaum gewählt werden, welches Dichteigenschaften aufweist.

Das Filtermedium umgibt den Dichtungswulst, wobei es in der Nähe des Dichtungswulstes fixiert ist. Im Bereich des Dichtungswulstes kann die Schweißnaht unterbrochen oder durchgängig ausgeführt sein. Bei einer unterbrochenen Schweißnaht, welche kurz vor dem Dichtungswulst endet oder lediglich den Dichtungswulst ausspart und nach dem Dichtungswulst wieder weiterläuft, ist das Filtermedium im Bereich des Dichtungswulstes an jeder Stelle flexibel, wodurch das Filtermedium bei der Montage in die Aufnahme komprimiert wird. Dadurch entsteht die Abdichtung zwischen der Aufnahme und dem Filterelement ohne zusätzliche Dichtungen.

Gemäß einer vorteilhaften Ausgestaltung der Erfindung ist das Filtermedium rechteckig ausgebildet und mit einer Längsnaht mit dem Stützkörper verschweißt. Hierbei kann das Filtermedium bereits vorgeschnitten sein oder direkt von einem Coil abgewickelt und anschließend abgeschnitten werden. Das rechteckige Filtermedium wird derart um den Stützkörper gelegt, dass sich das Ende und der Anfang überlappen. Anschließend wird das Filtermedium verschweißt.

Gemäß einer weiteren Ausführungsform der Erfindung ist das Filtermedium mit einer Dichtung an einer der Stirnseiten des Stützkörpers verbunden, wobei die Dichtung an einer Aufnahme, welche an einem, das Filterelement umgebenden Bauteil angeordnet ist, abstützbar ist. Die Dichtung besteht z B. aus TPE oder PUR-Schaum, welcher den Stützkörper in seinem Endbereich und das Filtermedium stirnseitig im Randbereich umschließt. Dadurch wird das Filtermedium auf dem Stützrohr fixiert. Weiterhin ist in Verbindung mit der Aufnahme eine dichtende Trennung zwischen Anström- und Abströmseite des Filterelementes gewährleistet.

Es ist vorteilhaft, dass ein separates Dichtsegment an der ersten Stirnseite ausschließlich mit dem Stützkörper verbunden ist. Durch dieses Dichtsegment ist das Filtermedium von der Dichtfunktion entkoppelt. Das Filtermedium umgibt den Stützkörper dichtend. Das Dichtsegment dichtet lediglich das Stützrohr gegenüber der Aufnahme ab. Somit könnte das Filtermedium, wenn es verschmutzt ist, von dem Stützkörper abgenommen und durch ein neues Filtermedium ersetzt werden, wobei das Dichtsegment, welches z.B. aus das Filtermedium, wenn es verschmutzt ist, von dem Stützkörper abgenommen und durch ein neues Filtermedium ersetzt werden, wobei das Dichtsegment welches z.B. aus Moosgummi besteht nicht ausgetauscht werden muß. Dies ermoglicht einen kosten- und materialgünstigen Wechsel des Filterelementes.

Gemäß einer weiteren Ausgestaltung der Erfindung ist das Filtermedium spiralförmig um den Stützkörper gewickelt, wobei das Filtermedium sowohl durch eine einzige Schweißnaht entlang der Spiralwicklung, als auch durch jeweils eine Schweißnaht an jedem Endbereich auf der Mantelfläche nahe der ersten bzw. zweiten Stirnfläche des Stützkörpers fixiert sein kann. Desweiteren können diese beiden Varianten auch miteinander kombiniert werden, wodurch das Filtermedium mit drei Schweißnähten auf dem Stützkörper fixiert ist. Die spiralförmige Wicklung des Filtermediums ist einfach herzustellen, besonders bei einem kontinuierlichen Prozess. Die Vorspannung des Filtermediums und der Winkel beim Wickeln können die Eigenschaften des Filterelementes beeinflussen, daher sind diese Parameter entsprechend den Anforderungen einzustellen. Hierbei könnte z.B. der Winkel derart gewählt werden, dass das Filtermedium den Stützkörper zweilagig umgibt. Bei einer ausreichend großen Vorspannung kann die Schweißnaht entlang der Spiralwicklung eingespart werden, da sich das Filtermedium selbst durch die nachfolgenden Wicklungen fixiert. Desweiteren ist es denkbar, dass im Bereich der aneinanderstoßenden Wicklungen ein Fixierband aus einem schweißbaren Material, welches insbesondere dem Filtermedium entspricht, aufgetragen wird, welches anschließend mit dem Filtermedium verschweißt wird.

Bei einer zweckmäßigen Ausgestaltung ist das erfindungsgemäße Filterelement in einen Luftfilter eingebracht. Der Luftfilter weist hierzu ein Gehäuse mit einem Deckel und einem Behälter auf. Der Behälter ist dichtend mit dem Deckel verbunden. Das Filterelement ist derart in das Gehause eingebracht, dass eine Rohseite dichtend von einer Reinseite getrennt ist. Das Gehäuse weist einen Einlass, durch welchen das zu reinigende Fluid einströmen kann, und einen Auslass, durch welchen das gereinigte Fluid ausströmen kann, auf.

Gemäß einer weiteren Ausgestaltung ist das erfindungsgemäße Filterelement als Sekundärelement in den Luftfilter eingebracht. Der Luftfilter weist noch ein Primärfilterelement auf, welches z.B. durch ein sternförmig gefaltetes Filterelement gebildet wird. Das Primärfilterelement scheidet die Verunreinigungen ab. Solange es intakt ist, kommt das Sekundärelement nicht mit den Verunreinigungen des Fluides in Kontakt. Bei einem defekten oder fehlenden Primärfilterelement reinigt das Sekundärelement das Fluid ausrei-Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigt
- Figur 1: ein Filterelement im Schnitt,
- Figur 2: ein Filterelement in einer Variante im Schnitt,
- Figur 3: ein Filterelement in einer Variante im Schnitt,
- Figur 4: ein Filterelement in einer Variante im Halbschnitt und
- Figur 5: einen Luftfilter im Schnitt.

### Beschreibung der Ausführungsbeispiele

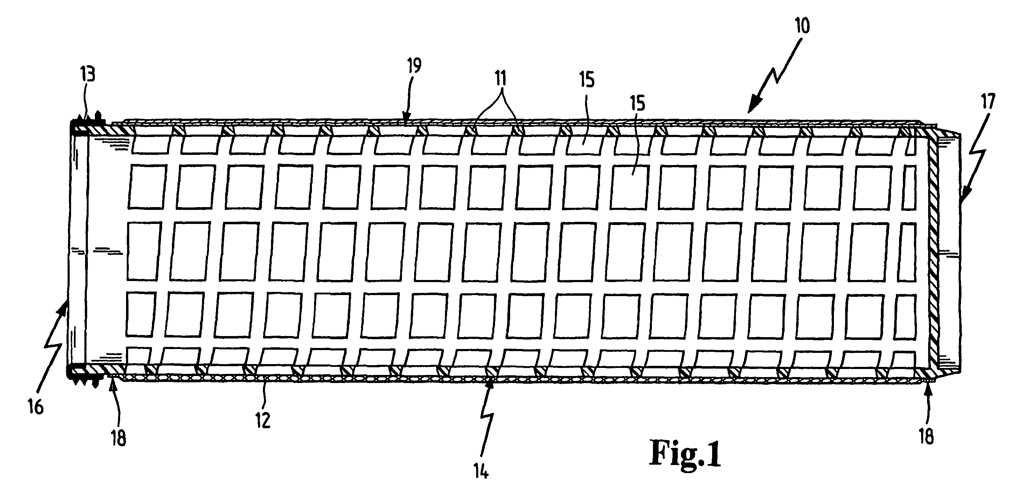

In Figur 1 ist ein Filterelement 10 im Schnitt dargestellt, wie es im Stand der Technik bekannt ist. Das Filterelement 10 wird durch einen Stützkörper 11, ein Filtermedium 12 und ein Dichtsegment 13 gebildet. Der Stützkörper 11 ist kreiszylindrisch ausgeführt und besteht aus Kunststoff. Damit das zu reinigende Fluid durch den Stützkörper 11 hindurchtreten kann, weist der Stützkörper 11 auf seiner Mantelfläche 14 mehrere Fenster 15 auf. Die Fenster 15 sind bei diesem Ausführungsbeispiel rechteckförmig ausgeführt. Es sind aber auch Ausführungen mit z.B. kreisförmigen oder dreieckigen Fenstern 15 möglich. Der Stützkörper 11 besitzt eine erste Stirnseite 16 und eine zweite Stirnseite 17. Die Mantelfläche 14 im Bereich der Stirnseiten 16, 17 weist keine Fenster 15 auf, wodurch an diesen Stellen kein Fluid durch den Stützkörper 11 hindurchtreten kann. An der ersten Stirnseite 16, welche offen ausgeführt ist, ist das Dichtsegment 13 angeordnet. Dieses Dichtsegment 13 ist ein Bauteil, welches auf den Stützkörper 11 montiert ist und die erste Stirnseite 16 umschließt, wodurch das Filterelement 10 dichtend in eine Aufnahme (nicht dargestellt) eingebracht werden kann. Das Dichtsegment 13 berührt das Filtermedium 12 nicht. Die zweite Stirnseite 17 ist geschlossen ausgeführt, wodurch sie auch ohne ein dichtendes Gegenstück (nicht dargestellt) verhindert, dass das Fluid ungereinigt von einer Rohseite (nicht dargestellt) auf eine Reinseite (nicht dargestellt) gelangt.

Das Filtermedium 12 besteht aus einem schweißbaren Polyesther-Vlies, welches den Stützkörper 11 in dem Bereich, in welchem die Fenster 15 angeordnet sind, an seiner Mantelfläche 14 umgibt. Bei diesem Ausführungsbeispiel ist das Filtermedium 12 mit zwei Radialschweißnähten 18 und einer Längsschweißnaht 19 auf dem Stützkörper 11 dichtend fixiert. Im Bereich der Schweißnähte 18, 19 ist das Filtermedium 12 komprimiert.

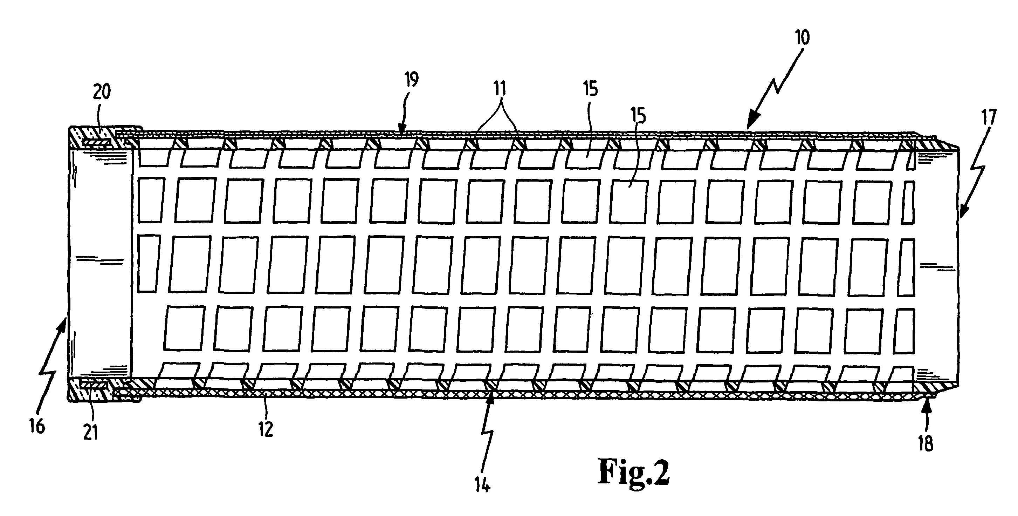

In Figur 2 ist ein im Stand der Technik bekanntes Filterelement 10 im Schnitt dargestellt. Der Figur 1 entsprechende Bauteile sind mit gleichen Bezugszeichen versehen. Bei dieser Variante ist das Filtermedium 12 mit einer Längsschweißnaht 19 und einer Radialschweißnaht 18 auf dem Stützkörper 11 fixiert. Im Bereich der ersten Stirnseite 16 ist das Filtermedium 12 durch eine Dichtung 20 fixiert. Diese Dichtung 20 besteht aus einem PUR-Schaum, welcher sowohl mit dem Filtermedium 12, als auch mit dem Stützkörper 11 verbunden ist. Zur Stabilisierung der Dichtung 20 ist ein Stützring 21 eingegossen.

Bei diesem Ausführungsbeispiel ist die zweite Stirnseite 17 offen ausgeführt. Bei der Montage des Filterelementes 10 in ein Gehäuse (nicht dargestellt) ist sowohl die erste Stirnseite 16, als auch die zweite Stirnseite 17 dichtend in eine Aufnahme (nicht dargestellt) einzubringen.

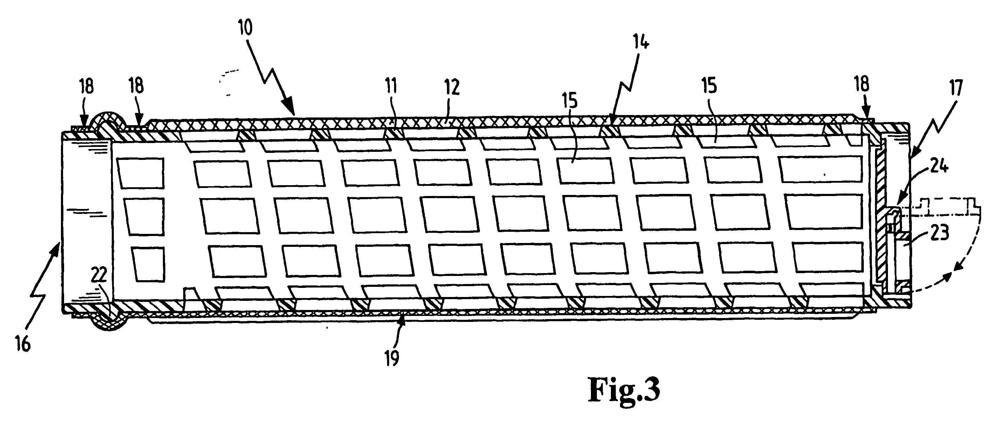

In Figur 3 ist ein Filterelement in einer Variante im Schnitt dargestellt. Der Figur 1 entsprechende Bauteile sind mit gleichen Bezugszeichen versehen. Der Stützkörper 11 weist im Bereich der ersten Stirnseite 16 einen Dichtungswulst 22 auf, welcher auf der Mantelfläche 14 radial umläuft. Das Filtermedium 12 überdeckt den Dichtungswulst 22 vollständig und ist sowohl vor, wie auch nach dem Dichtungswulst 22 mit jeweils einer Radialschweißnaht 18 auf dem Stützkörper 11 fixiert. Weiterhin ist die Längsschweißnaht 19 achsparallel zu dem Stützkörper 11 angeordnet, welche vor dem Dichtungswulst 22 endet. Der Teil des Filtermediums 12, welcher den Dichtungswulst 22 überdeckt, wird bei der Montage des Filterelementes 10 in seine Aufnahme (nicht dargestellt) komprimiert. Dadurch liegt das Filtermedium 12 dichtend an dieser Aufnahme (nicht dargestellt) an und verhindert so, dass ein Leckagestrom entsteht.

Im Bereich der zweiten Stirnseite 17 ist das Filtermedium 12 ebenfalls mit einer Radialschweißnaht 18 mit dem Stützkörper 11 verbunden. Die zweite Stirnseite 17 ist geschlos-Im Bereich der zweiten Stirnseite 17 ist das Filtermedium 12 ebenfalls mit einer Radialschweißnaht 18 mit dem Stützkörper 11 verbunden. Die zweite Stirnseite 17 ist geschlossen ausgeführt, wobei eine Aushebelasche 23 vorgesehen ist, mit welcher das Filterelement 10 aus seiner Aufnahme (nicht dargestellt) herausgezogen werden kann. Diese Aushebelasche 23 ist über ein Filmschamier 24 mit dem Stützkörper 11 verbunden. Bei der Demontage des Filterelementes 10 wird die Aushebelasche 24 um 90° gedreht (strichpunktiert dargestellt), so dass axiale Zugkräfte auf das Filterelement 10 übertragen werden können.

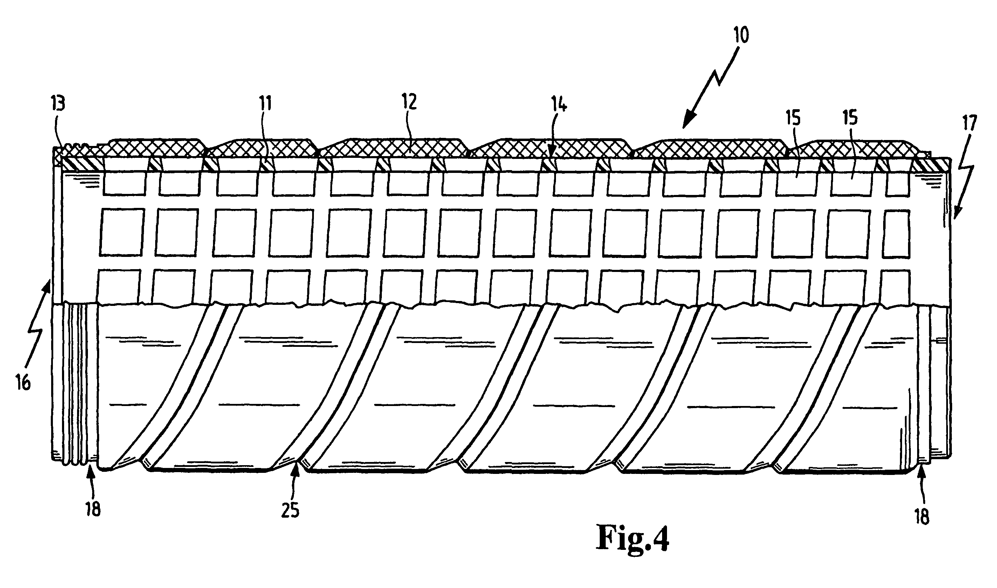

In Figur 4 ist ein Filterelement in einer Variante im Halbschnitt dargestellt. Der Figur 1 entsprechende Bauteile sind mit gleichen Bezugszeichen versehen. Bei diesem Ausführungsbeispiel ist das Filtermedium 12 spiralförmig um den Stützkörper 11 gewickelt. Zur Fixierung des Filtermediums 12 ist im Bereich der Stirnseiten 16, 17 jeweils eine Radialschweißnaht 18 angeordnet. Weiterhin ist das Filtermedium 12 mit einer Spiralschweißnaht 25 mit dem Stützkörper 11 verbunden. Diese Spiralschweißnaht 25 verläuft entlang dem Stoß des Filtermediums 12. Bei einer Überdeckung des Filtermediums 12 könnte die Spiralschweißnaht 25 auch mittig des überlappten Bereichs verlaufen, oder bei einer entsprechenden Vorspannung sogar entfallen.

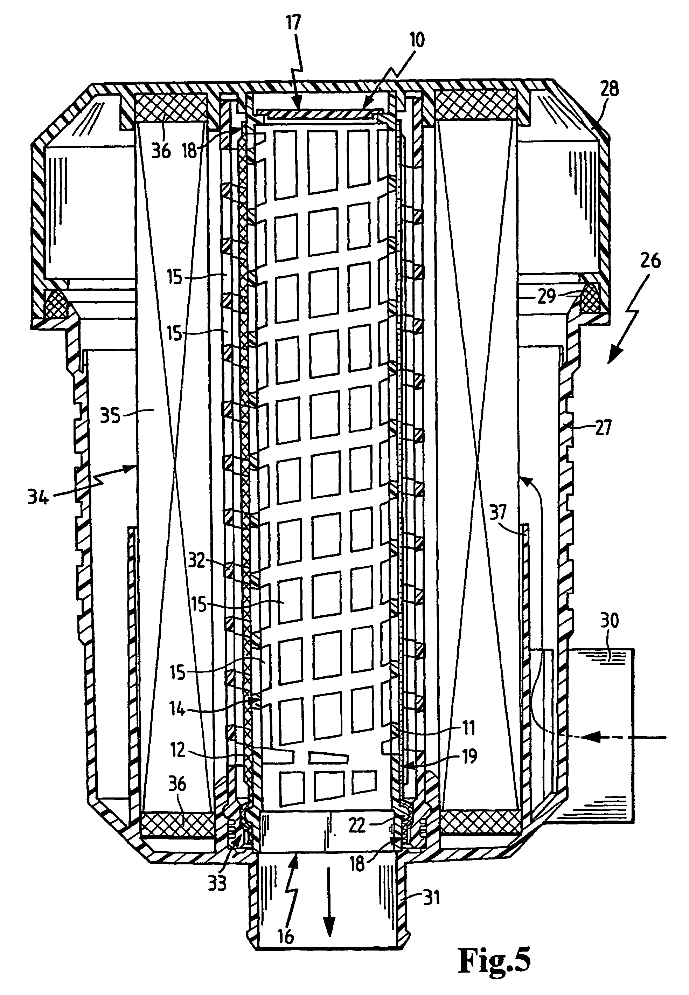

In Figur 5 ist ein Luftfilter im Schnitt dargestellt. Der Figur 3 entsprechende Bauteile sind mit gleichen Bezugszeichen versehen. Der Luftfilter weist ein zylindrisches Gehäuse 26 aus Kunststoff auf, welches über einen Behälter 27 und einen Deckel 28 verfügt. Der Behälter 27 ist mit einem Dichtmittel 29 dichtend mit dem Deckel 28 verbunden. Der Behälter 27 besitzt in bodennähe einen tangential einmündenden Einlass 30 und einen zentrisch angeordneten Auslassstutzen 31. In das Gehäuse 26 ist ein Filterelement 10, wie es in den Figuren 1 bis 4 beschrieben ist eingebracht. Das Filterelement 10 ist koaxial zu dem Auslassstutzen 31 angeordnet, wobei es von einem hohlzylindrischen Primärstützrohr 32, welches entsprechend dem Stützkörper 11 aus Kunststoff besteht und Fenster 15 aufweist, umgeben ist. In diesem Pnmärstützrohr 32 ist innenseitig eine Aufnahme 33 angeordnet, an welcher sich das Filterelement 10 mit seinem, von dem Filtermedium 12 überzogenen Dichtungswulst 22 im Bereich der ersten Stirnseite 16 dichtend abstützt. Um das Primärstützrohr 32 herum ist ein ringförmig geschlossenes, sternförmig gefaltetes Primärfilterelement 34 angeordnet, welches dichtend in das Gehäuse 26 eingebracht ist. Dieses Primärfilterelement 34 besteht aus einem Filterpapier 35 und zwei dichtend damit verbundenen Endscheiben 36. Die Endscheiben 36 bestehen aus einem Dichteigenschaften aufweisenden, elastischen Material, wie z.B PUR-Schaum. Damit die, durch den Einlass 30 einströmende Luft das Primärfilterelement 34 nicht nur an einer Stelle anströmt, besitzt der Behälter 27 eine Strömungsleitwand 37, an welcher die einströmende Luft erst hochsteigen muß, um das Primärfilterelement 34 zu durchströmen.

Wenn das Primärfilterelement 34 beschädigt ist oder fehlt, trennt das Filterelement 10 in Pfeilrichtung den Einlaß 30 dichtend von dem Auslassstutzen 31, wodurch die Luft zumindest grob gereinigt durch den Auslassstutzen 31 ausströmt.

## Patentansprüche

1. Filterelement (10) zur Reinigung eines Fluidstromes, aufweisend
einen zylindrischen Stützkörper (11) mit einer Mantelfläche (14), einer ersten Stirnseite (16) und einer zweiten Stirnseite (17), welcher für ein Fluid durchlässig ist und ein Filtermedium (12), welches den Stützkörper (11) an der Mantelfläche (14) umschließt, das Filtermedium (12) schweißbar ist und an dem Stützkörper (11) mit mindestens einer Schweißnaht (18, 19) verschweißt ist
**dadurch gekennzeichnet, dass**
der Stützkörper (11) einen radial umlaufenden Dichtungswulst (22) aufweist, welcher auf der Mantelfläche (14) nahe einer der beiden Stirnseiten (16, 17) angeordnet ist und dichtend an einer Aufnahme (33), welche in einem, das Filterelement (10) umgebende Bauteil angeordnet ist, abstützbar ist, wobei das Filtermedium (12) den Dichtungswulst (22) umgibt und in der Nähe des Dichtungswulstes (22) fixiert ist.

2. Filterelement (10) nach Anspruch 1, **dadurch gekennzeichnet, dass** das Filtermedium (12) rechteckig ausgebildet ist und mit einer Längsschweißnaht (19) mit dem Stützkörper (11) verschweißt ist.

3. Filterelement (10) nach einem der vorangehenden Ansprüche, **dadurch gekennzeichnet, dass** das Filtermedium (12) mit einer Dichtung (20) an einer der Stirnseiten (16), (17) des Stützkörpers (11) verbunden ist, wobei die Dichtung (20) an einer Aufnahme (33), welche an einem, das Filterelement (10) umgebenden Bauteil angeordnet ist, abstützbar ist.

4. Filterelement (10) nach einem der Ansprüche 1 oder 2, **dadurch gekennzeichnet, dass** ein Dichtsegment (13) an der ersten Stirnseite (16) ausschließlich mit dem Stützkörper (11) verbunden ist.

5. Filterelement (10) nach einem der vorangehenden Ansprüche, **dadurch gekennzeichnet, dass** das Filtermedium (12) spiralförmig um den Stützkörper (11) gewickelt ist.

6. Filterelement (10) nach Anspruch 5, **dadurch gekennzeichnet, dass** das Filtermedium (12) mit einer ersten Radialschweißnaht (18) auf der Mantelfläche (14) nahe der ersten Stimfläche (16) und mit einer zweiten Radialschweißnaht (18) auf der Mantelfläche (14) nahe der zweiten Stirnfläche (17) auf dem Stützkörper (11) befestigt ist.

7. Luftfilter aufweisend ein Gehäuse (26) mit einem Einlass (30) und einem Auslass (31), wobei der Einlass (30) dichtend von dem Auslass (31) getrennt ist, **dadurch gekennzeichnet, dass** ein Filterelement (10) nach einem der vorangehenden Ansprüche in das Gehäuse (26) eingebracht ist.

8. Luftfilter nach Anspruch 7 **dadurch gekennzeichnet, dass** zusätzlich zu dem Filterelement (10) noch ein Primärfilterelement (34) in das Gehäuse (26) eingebracht ist.

## Claims

1. Filter element (10) for filtering a fluid stream, said filter element including a cylindrical supporting body (11) having a surface (14), a first end face (16) and a second end face (17), said supporting body being permeable to a fluid, and a filter medium (12), which surrounds the supporting body (11) on the surface (14), the filter medium (12) is weldable and is welded to the supporting body (11) by at least one welding seam (18, 19), **characterised in that** the supporting body (11) includes a radially circumferential sealing bead (22), which is disposed on the surface (14) in the vicinity of one of the two end faces (16, 17) and is supportable in a sealing manner on a receiving means (33), which is disposed in a component surrounding the filter element (10), wherein the filter medium (12) surrounds the sealing bead (22) and is secured in the vicinity of the sealing bead (22).

2. Filter element (10) according to claim 1, **characterised in that** the filter medium (12) is rectangular and is welded to the supporting body (11) by a longitudinal welding seam (19).

3. Filter element (10) according to one of the preceding claims,
**characterised in that** the filter medium (12) is connected to one of the end faces (16), (17) of the supporting body (11) by a seal (20), wherein the seal (20) is supportable on a receiving means (33), which is disposed on a component surrounding the filter element (10).

4. Filter element (10) according to one of claims 1 or 2, **characterised in that** a sealing segment (13) on the first end face (16) is connected exclusively to the supporting body (11).

5. Filter element (10) according to one of the preceding claims,
**characterised in that** the filter medium (12) is wound in a spiral manner around the supporting body (11).

6. Filter element (10) according to claim 5, **characterised in that** the filter medium (12) is secured to the supporting body (11) by a first radial welding seam (18) on the surface (14) in the vicinity of the first end face (16) and by a second radial welding seam (18) on the surface (18) in the vicinity of the second end face (17).

7. Air filter including a housing (26) having an inlet (30) and an outlet (31), wherein the inlet (30) is sealingly separated from the outlet (31), **characterised in that** a filter element (10) according to one of the preceding claims is inserted into the housing (26).

8. Air filter according to claim 7, **characterised in that** another primary filter element (34) is also inserted into the housing (26) in addition to the filter element (10).

## Revendications

1. Elément filtrant (10) pour purifier un courant de fluide, présentant un corps de support cylindrique (11) avec une surface enveloppe (14), une première face frontale (16) et une seconde face frontale (17) et qui est perméable à un fluide, et un moyen filtrant (12) soudable qui entoure le corps de support (11) au niveau de la surface enveloppe (14), et est soudé au corps de support (11) par au moins une soudure (18, 19),
**caractérisé en ce que**
le corps de support (11) présente un boudin d'étanchéité (22) radialement circulaire qui est disposé sur la surface enveloppe (14) à proximité d'une des deux faces frontales (16, 17) et peut prendre appui de façon étanche sur un logement (33) disposé dans un composant entourant l'élément filtrant (10), le moyen filtrant (12) entourant le boudin d'étanchéité (22) et étant fixé à proximité de ce dernier.

2. Elément filtrant (10) selon la revendication 1,
**caractérisé en ce que**
le moyen filtrant (12) est rectangulaire et soudé avec le corps de support (11) par une soudure longitudinale (19).

3. Elément filtrant (10) selon l'une quelconque des revendications précédentes,
**caractérisé en ce que**
le moyen filtrant (12) est relié par une garniture d'étanchéité (20) à l'une des faces frontales (16), (17) du corps de support (11), la garniture d'étanchéité (20) pouvant prendre appui sur un logement (33) disposé sur un composant entourant l'élément filtrant (10).

4. Elément filtrant (10) selon l'une quelconque des revendications 1 ou 2,
**caractérisé en ce qu'**
un segment d'étanchéité (13) situé sur la première face frontale (16) n'est relié qu'au corps de support (11).

5. Elément filtrant (10) selon l'une quelconque des revendications précédentes,
**caractérisé en ce que**
le moyen filtrant (12) est enroulé en forme de spirale autour du corps de support (11).

6. Elément filtrant (10) selon la revendication 5,
**caractérisé en ce que**
le moyen filtrant (12) est fixé par une première soudure radiale (18) à la surface enveloppe (14) à proximité de la première face frontale (16), et par une seconde soudure radiale (18) à la surface enveloppe (14) à proximité de la seconde face frontale (17) sur le corps de support (11).

7. Filtre à air présentant un boîtier (26) avec une admission (30) et une évacuation (31), l'admission (30) étant séparée de façon étanche de l'évacuation (31),
**caractérisé en ce qu'**
un élément filtrant (10) selon l'une quelconque des revendications précédentes est inséré dans le boîtier (26).

8. Filtre à air selon la revendication 7,
**caractérisé en ce qu'**
en plus de l'élément filtrant (10) un élément filtrant primaire (34) est inséré dans le boîtier (26).
